# EUROPEAN PATENT APPLICATION

(11) **EP 4 823 193 A1**
(43) Date of publication of application: **14.10.2026**
(21) Application number: 23960868.0
(22) Date of filing: 08.12.2023
(51) Int. Cl.: H04W 56/00, H04W 36/08

(54) **BASE STATION**

(71) Applicant: NTT DOCOMO, INC., Tokyo 100-6150 (JP)
(72) Inventor: MIN Tianyang, Tokyo 100-6150 (JP); SAGAE Yuta, Tokyo 100-6150 (JP)
(74) Representative: Hoffmann Eitle
(86) International application number: PCT/JP2023/044093
(87) International publication number: WO 2025/120858

(57) **Abstract**

A base station includes: a control unit that calculates, using a learning model, a predicted value of a transmission timing for transmitting data to a base station which is a transmission destination, the transmission timing being used by a terminal for connecting to the base station without executing random access, and a valid period of the transmission timing; and a transmission unit that transmits the predicted value and the valid period to the base station which is the transmission destination.

## Description

### Technical Field

The present disclosure relates to a base station that executes an operation relating to mobility using a learning model.

### Background Art

The 3rd Generation Partnership Project (3GPP (registered trademark)) has specified the 5th generation mobile communication system (also referred to as 5G, New Radio (NR), or Next Generation (NG)), and is also proceeding with the specification of a next-generation mobile communication system called Beyond 5G, 5G Evolution, or 6G.

For example, utilization of an Artificial Intelligence/Machine Learning (AI/ML) model (hereinafter, also referred to as a learning model) has been studied. The learning model is mounted on a terminal (hereinafter, also referred to as a User Equipment (UE)) or a base station (hereinafter, also referred to as a gNodeB (gNB)), and is used to predict various parameters. By using the various parameters predicted by the learning model, improvements in performance in various areas such as Channel State Information (CSI) feedback, beam management (BM), positioning, mobility, network slicing, and Quality of Experience (QoE) are expected (Non-Patent Literature 1).

One type of the above-described mobility is RACH-less HO, which realizes a rapid Handover (HO) by omitting a Random Access (RA) procedure. The RACH-less HO is, for example, RACH-less Lower layer Triggered Mobility (LTM) currently under discussion, but may be RACH-less Conditional HO (CHO) scheduled to be discussed in the future.

The RACH-less HO includes a procedure called an early sync procedure as an advance preparation for realizing the rapid HO. The early sync procedure is a procedure for the UE to acquire a Timing Advance (TA) value with the gNB. The TA value is a parameter that advances a transmission timing at which the UE transmits data, and is a parameter indicating the transmission timing for each UE. By the early sync procedure, the UE can acquire the TA value in advance, so that the RA procedure at the time of HO can be omitted.

### Citation List

### Non-Patent Literature

"Moderator's summary for REL-19 RAN2 topic AI/ML for Air Interface SI (Mobility)", RP-232622, 3GPP TSG RAN Meeting #101, 3GPP, September 11-15, 2023

### Summary of Invention

However, there has been a problem that it takes time because it is necessary to go through many processes between a source gNB and a target gNB (in a case of inter-DU HO, a source DU and a target DU) before the UE acquires the TA value in the early sync procedure. For example, in the case of inter-DU HO, the following processes were necessary.
- The source DU instructs the UE to perform PDCCH ordered RACH.
- The UE transmits an RACH preamble to the target DU.
- The target DU calculates the TA value, and further transmits the TA value to the source DU via a CU.
- The source DU transmits a cell(s) switch command including the TA value to the UE.

Therefore, it is conceivable to predict the TA value using a learning model and realize the RACH-less HO using a predicted value of the TA value. However, in this case, there is a possibility that the predicted value becomes inappropriate due to movement of the UE or a change in a propagation environment.

Therefore, the present disclosure has been made in view of such a situation, and an object of the present disclosure is to provide a base station capable of calculating an appropriate predicted value of the TA value by utilizing a learning model.

An aspect of the present disclosure is a base station comprising: a control unit (control unit 170) that calculates, using a learning model, a predicted value of a transmission timing for transmitting data to a base station which is a transmission destination, the transmission timing being used by a terminal for connecting to the base station which is the transmission destination without executing random access, and a valid period of the transmission timing; and a transmission unit (radio signal transmission/reception unit 110) that transmits the predicted value and the valid period to the base station which is the transmission destination.

### Brief Description of Drawings

[Fig. 1] Fig. 1 is an overall schematic configuration diagram of a radio communication system.
[Fig. 2] Fig. 2 is a diagram illustrating a frequency range used in the radio communication system.
[Fig. 3] Fig. 3 is a diagram illustrating a configuration example of a radio frame, a subframe, a slot, and a symbol used in the radio communication system.
[Fig. 4] Fig. 4 is a functional block diagram of a terminal.
[Fig. 5] Fig. 5 is a functional block diagram of a base station.
[Fig. 6] Fig. 6 is a diagram illustrating an example of an architecture of a learning model.
[Fig. 7] Fig. 7 is a flow diagram illustrating an example of applicability of a predicted value of a TA value calculated by the terminal.
[Fig. 8] Fig. 8 is a flow diagram illustrating a case of applying the predicted value of the TA value based on a confidence score.
[Fig. 9] Fig. 9 is a flow diagram illustrating a case of not applying the predicted value of the TA value based on the confidence score.
[Fig. 10] Fig. 10 is a flow diagram illustrating an example of the applicability of the predicted value of the TA value.
[Fig. 11] Fig. 11 is a flow diagram illustrating an example of the applicability of the predicted value of the TA value.
[Fig. 12] Fig. 12 is a flow diagram explaining Fig. 7 in more detail.
[Fig. 13] Fig. 13 is a flow diagram illustrating an example of the applicability of the predicted value of the TA value calculated by a source DU of the base station.
[Fig. 14] Fig. 14 is a flow diagram illustrating an example of the applicability of the predicted value of the TA value calculated by a target DU of the base station.
[Fig. 15] Fig. 15 is a flow diagram illustrating an example of the applicability of the predicted value of the TA value calculated by a gNB-CU of a transition source base station (source gNB).
[Fig. 16] Fig. 16 is a flow diagram illustrating an example of the applicability of the predicted value of the TA value calculated by a gNB-CU of a base station which is a transition destination (target gNB).
[Fig. 17] Fig. 17 is a flow diagram illustrating an example of the applicability of the predicted value of the TA value calculated by the gNB-CU of the base station which is the transition destination (target gNB).
[Fig. 18] Fig. 18 is a flow diagram illustrating an example of a case where an HO executed using the predicted value of the TA value fails.
[Fig. 19] Fig. 19 is a diagram illustrating an example of a hardware configuration of the base station and the terminal.
[Fig. 20] Fig. 20 is a diagram illustrating a configuration example of a vehicle.

### Description of Embodiments

Hereinafter, embodiments will be described based on the drawings. Note that the same or similar reference numerals are assigned to the same functions and configurations, and the description thereof will be omitted as appropriate.

### (1) Configuration of Radio Communication System

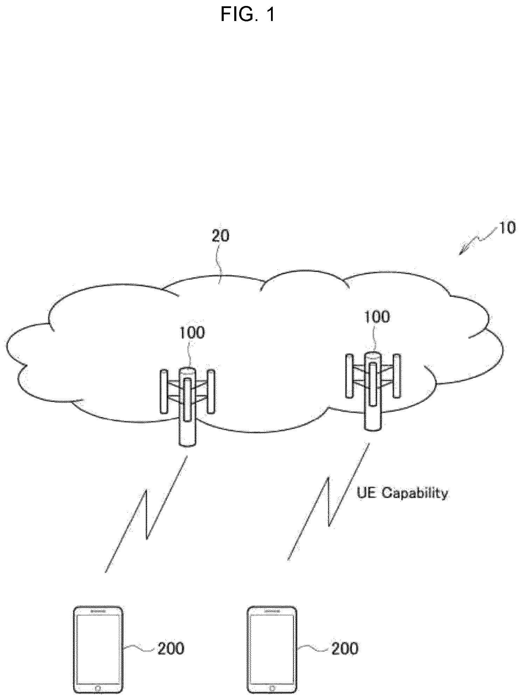

A radio communication system 10 shown in Fig. 1 is a radio communication system according to a scheme called 5G. On the other hand, the radio communication system 10 may be a radio communication system according to a scheme called Beyond 5G, 5G Evolution, or 6G.

The radio communication system 10 can support Massive Multiple-Input Multiple-Output (Massive MIMO) that generates a beam with higher directivity by controlling radio signals transmitted from a plurality of antenna elements, carrier aggregation (CA) that bundles and uses a plurality of component carriers (CCs), dual connectivity (DC) that performs simultaneous communication with two base stations, and the like.

As shown in Fig. 1, the radio communication system 10 includes a Next Generation-Radio Access Network (NG-RAN) 20, a base station 100 (hereinafter, also referred to as gNodeB (gNB) 100) connected to the NG-RAN 20, and a terminal 200 (hereinafter, also referred to as a User Equipment (UE) 200) that performs radio communication with the gNB 100. The NG-RAN 20 is connected to a core network (CN) (not shown). The NG-RAN 20 and the CN may be simply expressed as a "network". Further, the gNB 100 may be interpreted to be included in the network. Note that the specific configuration of the radio communication system 10, for example, the numbers of gNBs 100 and UEs 200, is not limited to the example shown in Fig. 1.

The gNB 100 may be a base station having a Centralized-Radio Access Network (C-RAN) configuration including a distributed unit (DU) having a function for connecting to the UE 200 and a central unit (CU) having a function for connecting to the network. In this case, the gNB 100 may be read as a DU, may be read as a CU, or may be read as a DU and a CU. When the gNB 100 is a DU, it may be referred to as a gNB-DU. When the gNB 100 is a CU, it may be referred to as a gNB-CU. When the gNB 100 includes a DU and a CU, a DU portion may be referred to as a gNB-DU and a CU portion may be referred to as a gNB-CU.

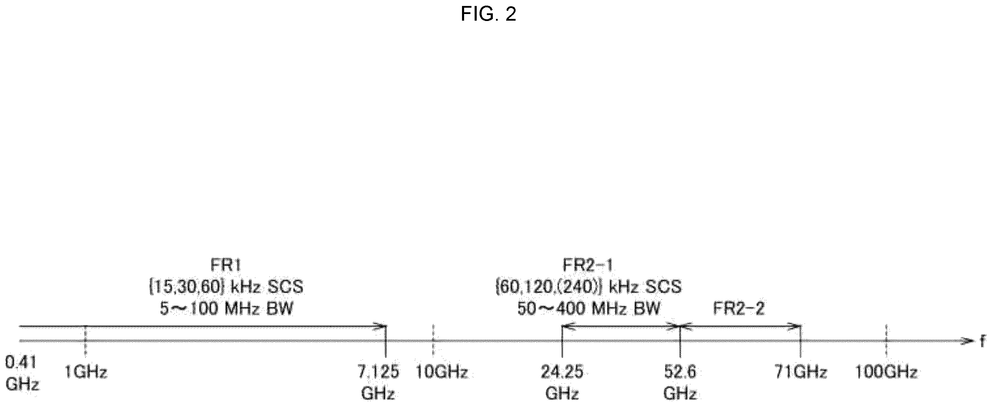

Further, the radio communication system 10 may correspond to a plurality of frequency ranges (FRs). That is, as shown in Fig. 2, the radio communication system 10 may correspond to the following FRs.
- FR1: 410 MHz to 7.125 GHz
- FR2-1: 24.25 GHz to 52.6 GHz
- FR2-2: Over 52.6 GHz to 71 GHz

In FR1, a subcarrier spacing (SCS) of 15, 30, or 60 kHz and a bandwidth (BW) of 5 to 100 MHz may be used. In FR2-1, an SCS of 60 or 120 kHz (which may be 240 kHz) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM) having a larger SCS may be applied in order to avoid an increase in phase noise.

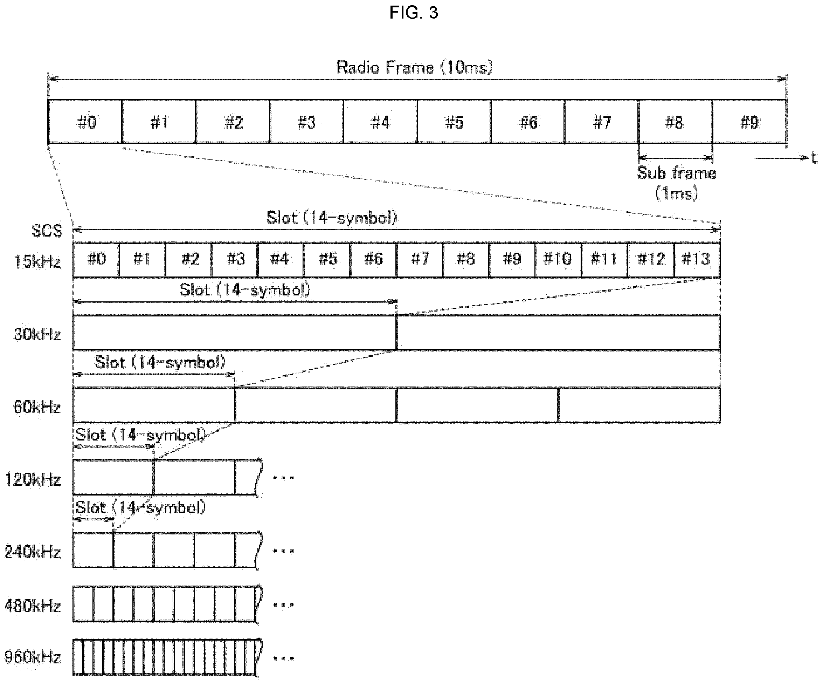

Further, as shown in Fig. 3, 1 slot in the radio communication system 10 is composed of 14 symbols. When this configuration is maintained, the symbol period (and slot period) becomes shorter as the SCS becomes larger (wider). Note that the SCS is not limited to the frequencies shown in Fig. 3, and may be a frequency such as 480 kHz or 960 kHz, for example.

Further, the number of symbols constituting 1 slot does not necessarily have to be 14 symbols, and may be, for example, 28 or 56 symbols. Furthermore, the number of slots per subframe may vary depending on the

### SCS.

### (2) Functional Block Configuration of Radio Communication System

### (2.1) Functional Block Configuration of Terminal

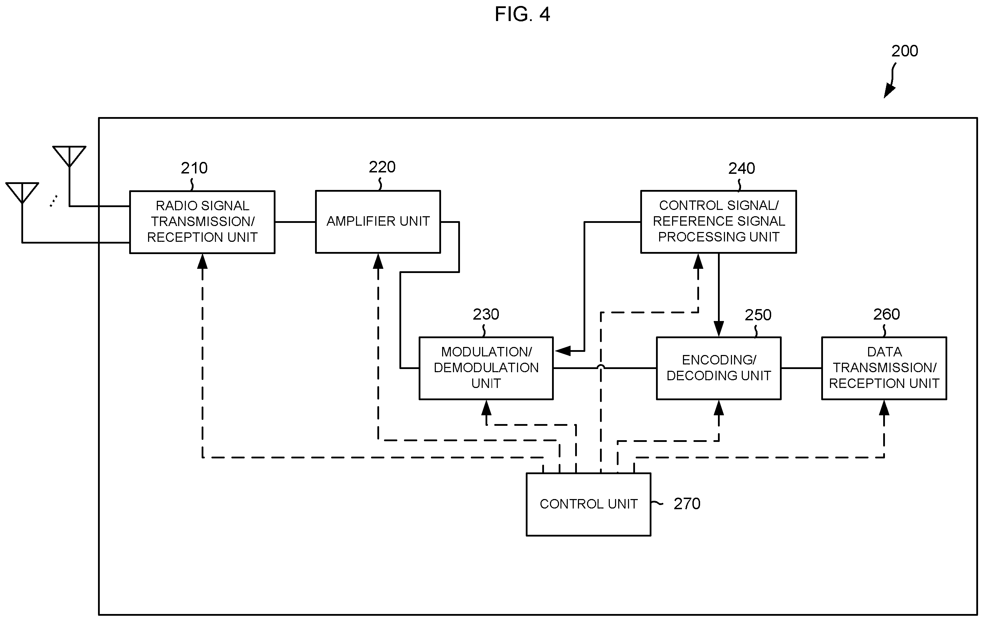

As shown in Fig. 4, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

The radio signal transmission/reception unit 210 transmits and receives a radio signal to and from the gNB 100. The radio signal transmission/reception unit 210 may constitute a transmission unit that transmits a radio signal to the gNB 100 and a reception unit that receives a radio signal from the gNB 100. The radio signal may include data, and may be read as data. Transmission may be read as reporting, notification, or the like. Reception may be read as configuration (being configured), instruction (being instructed), notification (being notified), or the like. Note that the configuration may be realized by configuration information (Information Element (IE)) of a Radio Resource Control (RRC) layer, and the instruction may be realized by a Control Element (CE) of a Medium Access Control (MAC) layer, or Downlink Control Information (DCI).

The radio signal transmission/reception unit 210 of the embodiment can transmit a predicted value of a TA value to the gNB 100 (for example, the gNB 100 of the transition destination of the UE 200 executing the HO). The TA value is a parameter that advances a transmission timing at which the UE 200 transmits data to the gNB 100, and is a parameter indicating the transmission timing for each UE 200. Therefore, it can be said that the TA value is a transmission timing, determined for each UE 200, for transmitting data to the gNB 100. Further, the TA value is a parameter acquired in random access when connecting to the gNB 100. That is, if there is a TA value, random access when connecting to the gNB 100 can be omitted. Therefore, it can also be said that the TA value is a parameter used for connecting to the gNB 100 without executing random access.

The radio signal transmission/reception unit 210 of the embodiment can transmit not only the predicted value of the TA value but also a valid period of the TA value to the gNB 100 (for example, the gNB 100 of the transition destination of the UE 200 executing the HO). The valid period of the TA value may be interpreted as a period in which the transmission timing and the reception timing match (in terms of scheduling) in the transmission of data from the UE 200 to the gNB 100. Note that the valid period of the TA value may be set in consideration of a case where the transmission timing and the reception timing do not match due to a change over time such as movement of the UE 200 or a change in a propagation environment.

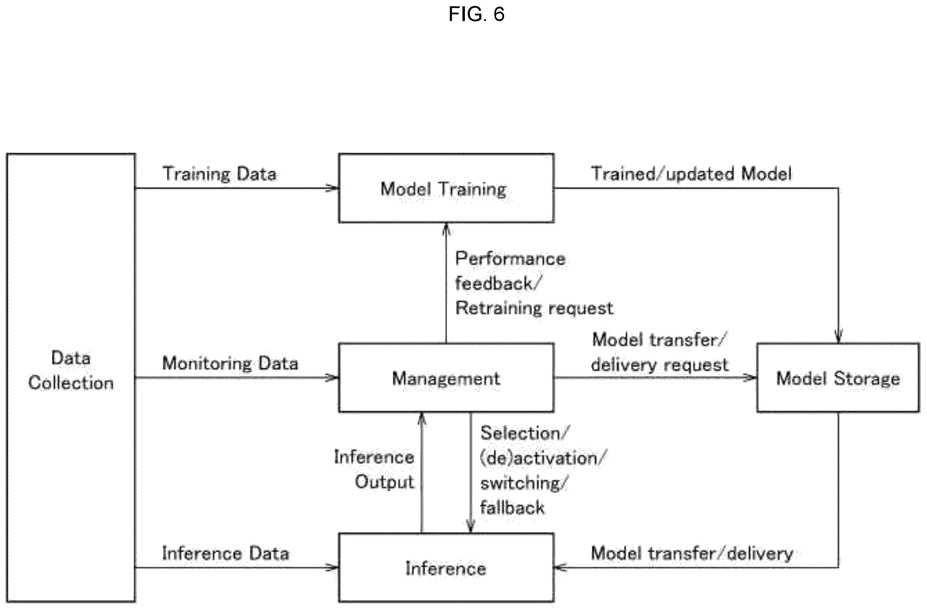

The predicted value of the TA value is a TA value calculated by the control unit 270 using a learning model. That is, the predicted value of the TA value is not a TA value calculated directly based on an actual environment or condition, but is a TA value estimated to be calculated as such a TA value under the current environment or condition based on a TA value in a past environment or condition. Further, the valid period of the TA value is a valid period of the TA value calculated by the control unit 270 using a learning model. Therefore, the valid period of the TA value in the embodiment is the valid period of the TA value (predicted value of the valid period) estimated using a learning model, similarly to the predicted value of the TA value. Note that the architecture of the learning model will be described later with reference to Fig. 6.

The radio signal transmission/reception unit 210 of the embodiment may transmit a confidence score calculated by the control unit 270 using a learning model to the gNB 100 (for example, the gNB 100 of the transition destination of the UE 200 executing the HO). The confidence score may be a confidence score for the predicted value of the TA value, or may be a confidence score for the valid period of the TA value. Further, the confidence score may be a confidence score for another parameter calculated by the control unit 270 using a learning model. The confidence score may be calculated, for example, as 90 points out of a perfect score of 100 points.

The radio signal transmission/reception unit 210 of the embodiment may transmit the predicted value of the TA value when at least one of the following conditions is satisfied.
- When instructed by the gNB 100 to report the predicted value of the TA value (note that a specific instruction may be realized by an RRC configuration message, MAC CE, DCI, or the like)
- When the valid period of the TA value has expired (for example, when a timer managing the valid period of the TA value has expired)

The amplifier unit 220 is configured by a Power Amplifier (PA)/Low Noise Amplifier (LNA) and the like. The amplifier unit 220 amplifies the radio signal output from the radio signal transmission/reception unit 210. Further, the amplifier unit 220 amplifies the radio signal output from the modulation/demodulation unit 230.

The modulation/demodulation unit 230 executes data modulation/demodulation, transmission power setting, resource block allocation, and the like for each predetermined communication destination (gNB 100 or another gNB). In the modulation/demodulation unit 230, CP-OFDM/DFT-S-OFDM may be applied. Further, DFT-S-OFDM may be used not only for uplink (UL) but also for downlink (DL).

The control signal/reference signal processing unit 240 executes processing relating to a control signal transmitted and received to and from the gNB 100, for example, Radio Resource Control (RRC) signaling.

The control signal/reference signal processing unit 240 executes processing relating to a reference signal transmitted and received to and from the gNB 100, for example, a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS).

Note that the channel includes a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 250 executes division/concatenation and coding/decoding of data included in the radio signal for each predetermined communication destination (gNB 100 or another gNB).

Specifically, the encoding/decoding unit 250 decodes the data output from the modulation/demodulation unit 230, and concatenates the decoded data. Further, the encoding/decoding unit 250 divides the data output from the data transmission/reception unit 260 into a predetermined size, and executes coding on the divided data.

The data transmission/reception unit 260 executes assembly/disassembly of a data unit (Protocol Data Unit (PDU)/Service Data Unit (SDU)) constituting data between respective layers. The plurality of layers are a Medium Access Control (MAC) layer, a Radio Link Control (RLC) layer, a Packet Data Convergence Protocol (PDCP) layer, and the like. Further, the data transmission/reception unit 260 executes error correction and retransmission control of data based on Hybrid Automatic Repeat Request (HARQ).

The control unit 270 controls the UE 200. The control unit 270 controls, for example, transmission and reception of radio signals by the radio signal transmission/reception unit 210, amplification by the amplifier unit 220, data modulation/demodulation by the modulation/demodulation unit 230, signal processing by the control signal/reference signal processing unit 240, coding/decoding by the encoding/decoding unit 250, and assembly/disassembly of data units by the data transmission/reception unit 260.

The control unit 270 of the embodiment can execute HO of the UE 200, that is, connection to the gNB 100 of the transition destination. Note that the HO executed by the control unit 270 may be an HO in L3, or an HO in L1/L2, that is, LTM. The LTM is controlled in L1/L2, which is a lower layer than L3, whereby the HO can be completed in a shorter time as compared with the HO in L3.

In the HO (LTM), the control unit 270 of the embodiment may execute random access with the gNB 100 of the transition destination, or may not execute random access with the gNB 100 of the transition destination. Hereinafter, the former HO may be referred to as RACH-based HO, and the latter HO may be referred to as RACH-less HO. The RACH-less HO is realized by an early sync procedure in which the UE 200 acquires a TA value in advance. Therefore, the RACH-less HO may be interpreted as an HO such as LTM or CHO to which the early sync procedure is applicable. Further, these RACH-less HOs may be referred to as RACH-less LTM or RACH-less CHO.

The control unit 270 of the embodiment can calculate a predicted value of the TA value using a learning model. As described in the description of the radio signal transmission/reception unit 210, the TA value is a parameter indicating the transmission timing for transmitting data to the gNB 100, which is used to connect to the gNB 100 without executing random access. Therefore, it can be said that the predicted value of the TA value is also a parameter (predicted value of transmission timing) indicating the transmission timing for transmitting data to the gNB 100, which is used to connect to the gNB 100 without executing random access. Further, the control unit 270 can calculate the valid period of the TA value using the learning model. Furthermore, the control unit 270 may calculate a confidence score for the predicted value of the TA value or the valid period of the TA value.

The control unit 270 of the embodiment may execute the RACH-less HO when the gNB 100 permits the use of the predicted value of the TA value, and may execute the RACH-based HO when the gNB 100 does not permit the use of the predicted value of the TA value. Further, even when the gNB 100 permits the use of the predicted value of the TA value, if the connection with the gNB 100 fails using the predicted value, the control unit 270 may execute random access (that is, RACH-based HO) to the gNB 100.

### (2.2) Functional Block Configuration of Base Station

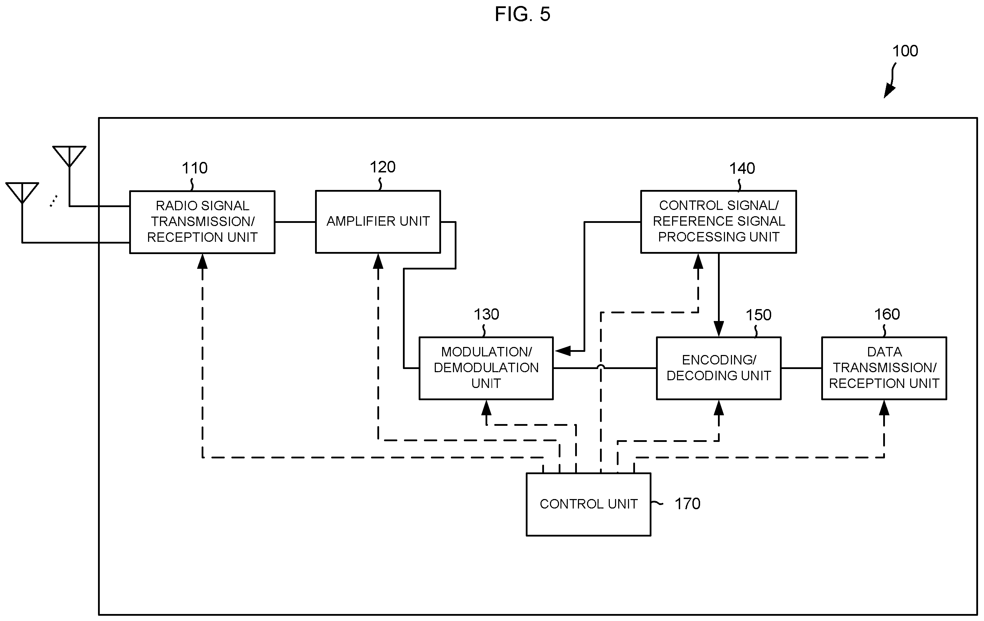

As shown in Fig. 5, the gNB 100 includes a radio signal transmission/reception unit 110, an amplifier unit 120, a modulation/demodulation unit 130, a control signal/reference signal processing unit 140, an encoding/decoding unit 150, a data transmission/reception unit 160, and a control unit 170.

Each configuration of the gNB 100 in the following description may be interpreted as each configuration of the source gNB, or may be interpreted as each configuration of the target gNB. The source gNB may be interpreted as the gNB 100 of the transition source of the UE 200 (hereinafter, also referred to as a gNB 100A), and the target gNB may be interpreted as the gNB 100 of the transition destination of the UE 200 (hereinafter, also referred to as a gNB 100B). Further, the gNB 100 of the embodiment may be interpreted as a gNB-CU, may be interpreted as a gNB-DU, or may be interpreted as both of them as described above.

The radio signal transmission/reception unit 110 transmits and receives a radio signal to and from the UE 200. The radio signal transmission/reception unit 110 may constitute a transmission unit that transmits a radio signal to the UE 200 and a reception unit that receives a radio signal from the UE 200. The radio signal may include data, and may be read as data. Transmission may be read as configuration, instruction, notification, or the like. Reception may be read as reporting (being reported), notification (being notified), or the like. Note that the configuration may be realized by configuration information (Information Element (IE)) of a Radio Resource Control (RRC) layer, and the instruction may be realized by a Control Element (CE) of a Medium Access Control (MAC) layer, or Downlink Control Information (DCI).

The radio signal transmission/reception unit 110 of the embodiment can have the same function as the radio signal transmission/reception unit 210 of the UE 200. That is, the radio signal transmission/reception unit 110 can transmit, to the gNB 100B, a predicted value of a parameter (TA value) indicating a transmission timing for transmitting data to the gNB 100, which is used for the UE 200 to connect to the gNB 100B without executing random access. Further, the radio signal transmission/reception unit 110 can transmit a valid period of the TA value to the gNB 100B. The predicted value of the TA value and the valid period of the TA value transmitted by the radio signal transmission/reception unit 110 may be calculated using a learning model by the control unit 170 of the gNB 100A having the same function as the control unit 270 of the UE 200.

The radio signal transmission/reception unit 110 of the embodiment can transmit and receive data to and from a gNB-DU of a transition destination of the UE 200 via a gNB-CU when the gNB 100 is composed of a plurality of gNB-DUs and the gNB-CU. In this case, among the plurality of gNB-DUs, a gNB-DU of a transition source of the UE 200 may be regarded as the gNB 100A, and the gNB-DU of the transition destination of the UE 200 may be regarded as the gNB 100B.

The radio signal transmission/reception unit 110 of the embodiment may transmit a confidence score for the predicted value of the TA value or the valid period of the TA value to the gNB 100B. The confidence score may be calculated by the control unit 170 of the gNB 100A using a learning model.

The radio signal transmission/reception unit 110 of the embodiment may transmit the predicted value of the TA value to the UE 200 when the gNB 100B permits use of the predicted value of the TA value (use of the predicted value of the TA value when the UE 200 executes the RACH-less HO to the gNB 100B). In this case, the gNB 100B may permit the use of the predicted value of the TA value based on the confidence score described above.

The radio signal transmission/reception unit 110 of the embodiment may transmit the predicted value of the TA value included in a transition command (for example, a cell(s) switch command) to the UE 200.

The amplifier unit 120 is configured by a Power Amplifier (PA)/Low Noise Amplifier (LNA) and the like. The amplifier unit 120 amplifies the radio signal output from the radio signal transmission/reception unit 110. Further, the amplifier unit 120 amplifies the radio signal output from the modulation/demodulation unit 130.

The modulation/demodulation unit 130 executes data modulation/demodulation, transmission power setting, resource block allocation, and the like for each predetermined communication destination (UE 200 or another UE). In the modulation/demodulation unit 130, CP-OFDM/DFT-S-OFDM may be applied. Further, DFT-S-OFDM may be used not only for uplink (UL) but also for downlink (DL).

The control signal/reference signal processing unit 140 executes processing relating to a control signal transmitted and received to and from the UE 200, for example, Radio Resource Control (RRC) signaling.

The control signal/reference signal processing unit 140 executes processing relating to a reference signal transmitted and received to and from the UE 200, for example, a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS).

Note that the channel includes a control channel and a data channel. The control channel includes a Physical Uplink Control Channel (PUCCH), a Physical Downlink Control Channel (PDCCH), a Physical Random Access Channel (PRACH), a Physical Broadcast Channel (PBCH), and the like. The data channel includes a Physical Uplink Shared Channel (PUSCH), a Physical Downlink Shared Channel (PDSCH), and the like.

The encoding/decoding unit 150 executes division/concatenation and coding/decoding of data included in the radio signal for each predetermined communication destination (UE 200 or another UE).

Specifically, the encoding/decoding unit 150 decodes the data output from the modulation/demodulation unit 130, and concatenates the decoded data. Further, the encoding/decoding unit 150 divides the data output from the data transmission/reception unit 160 into a predetermined size, and executes coding on the divided data.

The data transmission/reception unit 160 executes assembly/disassembly of a data unit (Protocol Data Unit (PDU)/Service Data Unit (SDU)) constituting data between respective layers. The plurality of layers are a Medium Access Control (MAC) layer, a Radio Link Control (RLC) layer, a Packet Data Convergence Protocol (PDCP) layer, and the like. Further, the data transmission/reception unit 160 executes error correction and retransmission control of data based on Hybrid Automatic Repeat Request (HARQ).

The control unit 170 controls the gNB 100. The control unit 170 controls, for example, transmission and reception of radio signals by the radio signal transmission/reception unit 110, amplification by the amplifier unit 120, data modulation/demodulation by the modulation/demodulation unit 130, signal processing by the control signal/reference signal processing unit 140, coding/decoding by the encoding/decoding unit 150, and assembly/disassembly of data units by the data transmission/reception unit 160. Further, the control unit 170 executes scheduling for the UE 200.

The control unit 170 of the embodiment can control the HO by the UE 200, that is, the transition to the gNB 100B. Note that the HO controlled by the control unit 270 may be an HO in L3, or an HO in L1/L2, that is, LTM. The LTM is controlled in L1/L2, which is a lower layer than L3, whereby the HO can be completed in a shorter time as compared with the HO in L3.

In the HO executed by the UE 200, the control unit 170 of the embodiment may execute random access with the UE 200, or may not execute random access with the UE 200.

Similarly to the control unit 270 of the UE 200, the control unit 170 of the embodiment can calculate a predicted value of the TA value using a learning model. Further, the control unit 170 can calculate the valid period of the TA value using the learning model. Furthermore, the control unit 170 may calculate a confidence score for the predicted value of the TA value or the valid period of the TA value. The description of the TA value is omitted here because it overlaps with the above description.

The control unit 170 of the embodiment can permit the UE 200 to use the predicted value of the TA value calculated by itself or the predicted value of the TA value calculated by the UE 200. In other words, the control unit 170 can verify whether the predicted value of the TA value is appropriate, and determine whether to use the predicted value of the TA value. Such verification and determination may be performed based on the valid period of the TA value described above, or may be performed based on the confidence score for the predicted value of the TA value or the valid period of the TA value described above. The UE 200 may execute the RACH-less HO when the control unit 170 permits the use, and may execute the RACH-based HO when the gNB 100 does not permit the use of the predicted value of the TA value.

### (2.3) Architecture of Learning Model

As shown in Fig. 6, the learning model may include the following functions as its architecture. Note that the architecture of Fig. 6 is a technology disclosed in Fig. 4.4-1 of 3GPP R2-2313107, and will be described with reference to this as appropriate.
- "Data collection unit": Provides input data to a "model training unit", a "management unit", and an "Inference unit" at a subsequent stage.
- "Model training unit": Executes training of a learning model, and stores the trained learning model in a "model storage unit".
- "Management unit": Requests the "model training unit" for feedback on performance of a learning model/retraining. Further, performs selection/activation (deactivation)/change/fallback of a learning model to the "Inferring unit". Furthermore, requests the "model storage unit" for a learning model.
- "Inferring unit": Outputs a predicted value corresponding to the input data to the "management unit" using a learning model stored in the "model storage unit".
- "Model storage unit": Stores a learning model, and provides the learning model to the "Inference unit" in response to a request from the "management unit".

### (3) Operation of Radio Communication System

### (3.1) Problem

There has been a problem that it takes time because it is necessary to go through many processes between a source gNB and a target gNB (in a case of inter-DU HO, a source DU and a target DU) before the UE acquires the TA value in the early sync procedure. Therefore, it is conceivable to predict the TA value using a learning model and realize the RACH-less HO using a predicted value of the TA value. However, in this case, there is a possibility that the predicted value becomes inappropriate due to movement of the UE or a change in a propagation environment.

### (3.2) Operation Example

### (3.2.1) Operation Example 1

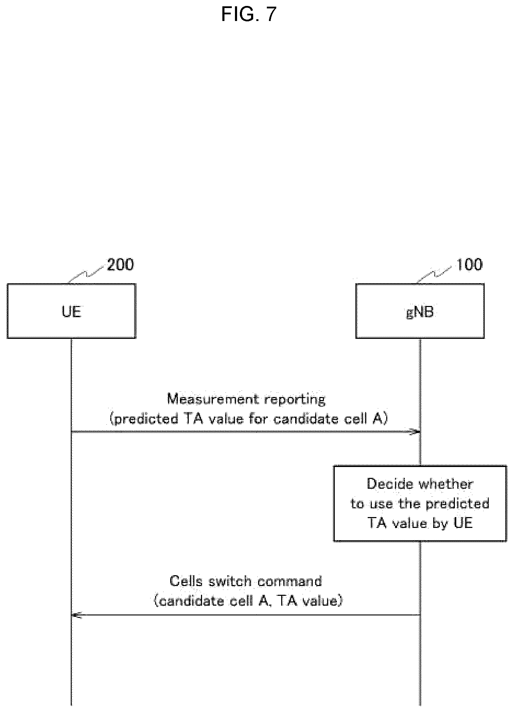

Operation Example 1 will be described with reference to Fig. 7 to Fig. 12. Operation Example 1 is based on the premise that a learning model is mounted on the UE 200. That is, in Operation Example 1, an entity that calculates various parameters such as a predicted value of the TA value using a learning model is the UE 200.

The UE 200 can predict a TA value in a case of HO to a candidate cell or a neighbor cell formed by the gNB 100 using a learning model, and calculate a predicted value of the TA value. Note that the HO in the present operation example may be an HO (LTM, CHO, etc.) to which RACH-less HO is applicable, but may be RACH-based HO (conventional HO).

As shown in Fig. 7, the UE 200 may calculate the predicted value of the TA value for each candidate cell, and report the predicted value to the gNB 100 in a measurement report. In this case, a predicted value of a TAG value obtained by grouping TA values of a plurality of candidate cells may be reported. Further, the UE 200 may predict a valid period of each TA value (hereinafter, also referred to as a TA timer) using a learning model, and report the valid period to the gNB 100 in the measurement report. An example is shown below. Note that the measurement report may include a measurement value of cell quality such as L1/L3 Reference Signal Received Power (RSRP) corresponding to a layer executing the HO.
- Candidate cell A, B: Predicted value of TA value or TAG value, predicted value of TA timer
- Candidate cell C: Predicted value of TA value, predicted value of TA timer

Further, when a plurality of TA values can be configured for one candidate cell, the UE 200 may calculate predicted values of the plurality of TA values using a learning model, and report the predicted values to the gNB 100 in the measurement report. An example is shown below.
- Candidate cell D: Predicted value 1 of TA value, predicted value 1 of TA timer, predicted value 2 of TA value, predicted value 2 of TA timer

Returning to Fig. 7, the gNB 100 verifies the predicted value of the TA value received from the UE 200, and determines whether the UE 200 may use it in the RACH-less HO. When permitting the use of the predicted value of the TA value, the gNB 100 transmits a transition command (for example, a cell(s) switch command) to the UE 200. In response to this, the UE 200 executes the RACH-less HO using the predicted value of the TA value. Note that the transition command may (re-)include a candidate cell A of the transition destination and a TA value to be applied to the candidate cell A.

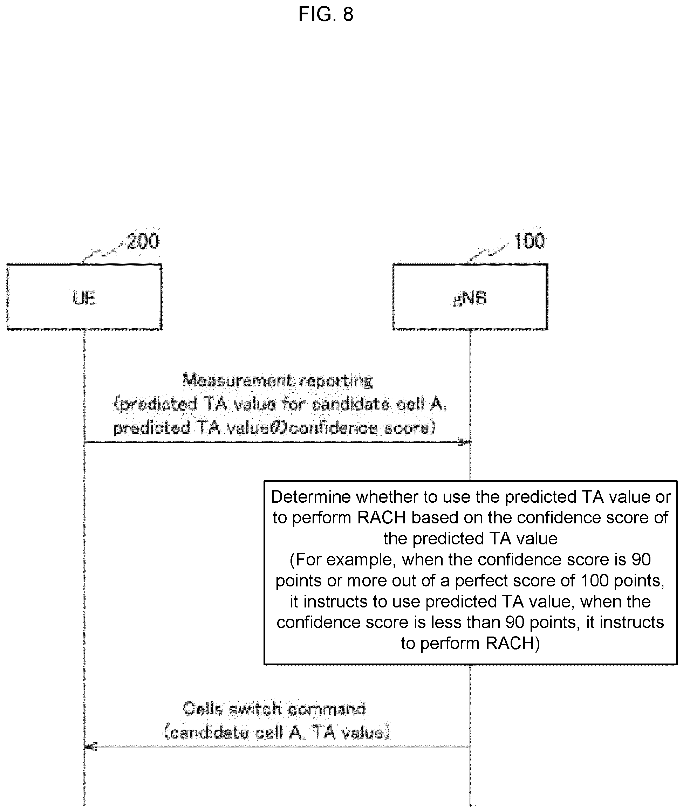

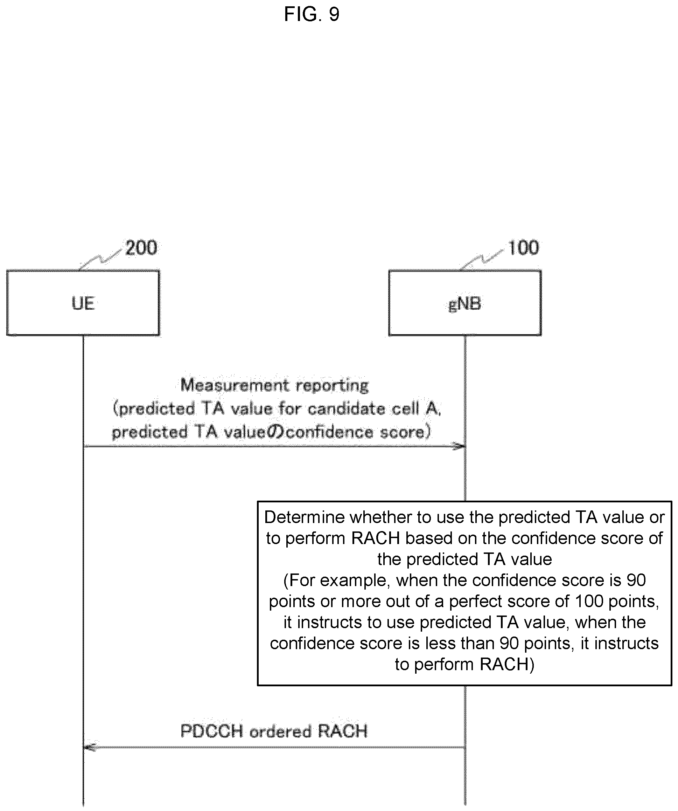

The UE 200 may calculate a confidence score for the predicted value of the TA value or the valid period of the TA value, and report this confidence score to the gNB 100. Fig. 8 illustrates a case where the confidence score is 90 points or more out of a perfect score of 100 points, and Fig. 9 illustrates a case where the confidence score is less than 90 points out of a perfect score of 100 points. In the case of Fig. 8, the gNB 100 permits the use of the predicted value of the TA value, and instructs the UE 200 to perform RACH-less HO (cells switch command in the figure). In the case of Fig. 9, the gNB 100 does not permit the use of the predicted value of the TA value, and instructs the UE 200 to perform RACH-based HO (PDCCH ordered RACH in the figure). Note that a threshold value for causing the UE 200 to execute RACH-less HO or RACH-based HO is not limited to 90 points or more out of a perfect score of 100 points, and may be 80 points or more out of a perfect score of 100 points. The perfect score of the confidence score is not limited to 100 points.

The UE 200 can execute first transmission using a configured grant when executing RACH-less HO for a target cell. In this case, a valid period of the configured grant is managed by a timer (for example, cg-LTM-retransmissionTimer). The UE 200 may also calculate (predict) this valid period of the configured grant using a learning model. Note that the configured grant is a PUSCH resource allocated in advance, and by using this resource, UL transmission can be executed omitting a scheduling request.

The TA value calculated by the UE 200 using the learning model may be a TA value in a Non-Terrestrial Network (NTN). In this case, the predicted value of the TA value may be a sum of a predicted value of a service link roundtrip time (service link RTT) and a predicted value of a common TA value. Network may perform K_offset configuration in scheduling using this predicted value of the TA value.

A difference may occur in the calculated predicted value of the TA value depending on a vendor of the UE 200. In order to cope with this, the UE 200 may predict an offset of the TA value using a learning model (hereinafter, this predicted value is also referred to as an offset predicted value). Note that the offset predicted value may be configured to the UE 200 by the gNB 100. In this case, a learning model may also be mounted on the gNB 100, and the gNB 100 may calculate the offset predicted value using the learning model. The UE 200 may execute the RACH-less HO by adding the offset predicted value to the predicted value of the TA value.

The UE 200 may calculate the predicted value of the TA value using the learning model when receiving an instruction from the gNB 100.

The UE 200 may report the predicted value of the TA value to the gNB 100 when receiving an instruction to report from the gNB 100. A timing of reporting may be a case where a timer managing the valid period of the predicted TA value expires, or a case where a timer managing a valid period of an existing TA value (not a prediction by a learning model) expires.

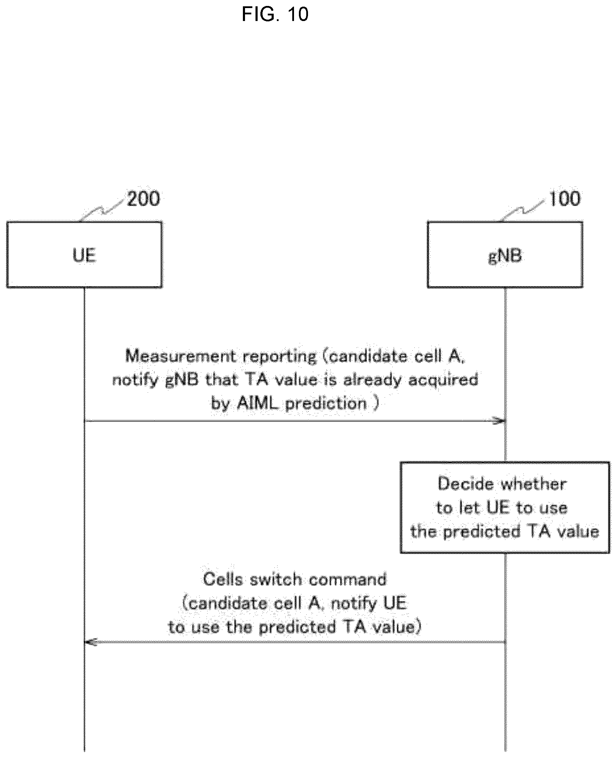

On the other hand, as shown in Fig. 10, the predicted value of the TA value does not have to be reported. In this case, the UE 200 reports that the predicted value of the TA value has been calculated using the learning model to the gNB 100, for example, via a measurement report. Similarly to the description regarding Fig. 7, the gNB 100 determines applicability of the predicted value of the TA value, and transmits a transition command to the UE 200 in accordance with the determination.

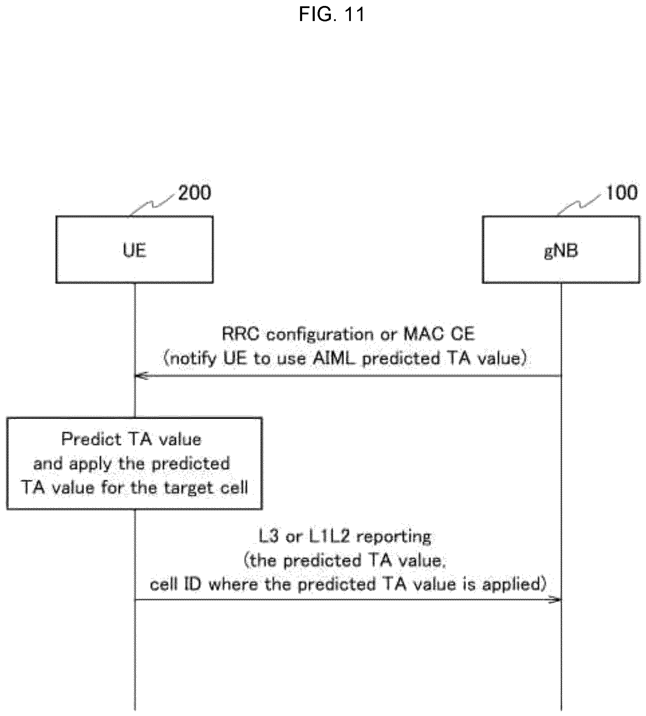

As shown in Fig. 11, when notified from the gNB 100 to use the predicted value of the TA value, the UE 200 may autonomously calculate the predicted value of the TA value, and further apply the predicted TA value to execute RACH-less HO for the target cell. In this case, the UE 200 may report the applied predicted value of the TA value and a cell ID of the transition destination to the gNB 100 after completion of the HO.

The UE 200 may fall back to the RACH-based HO when the RACH-less HO described in the present operation example fails.

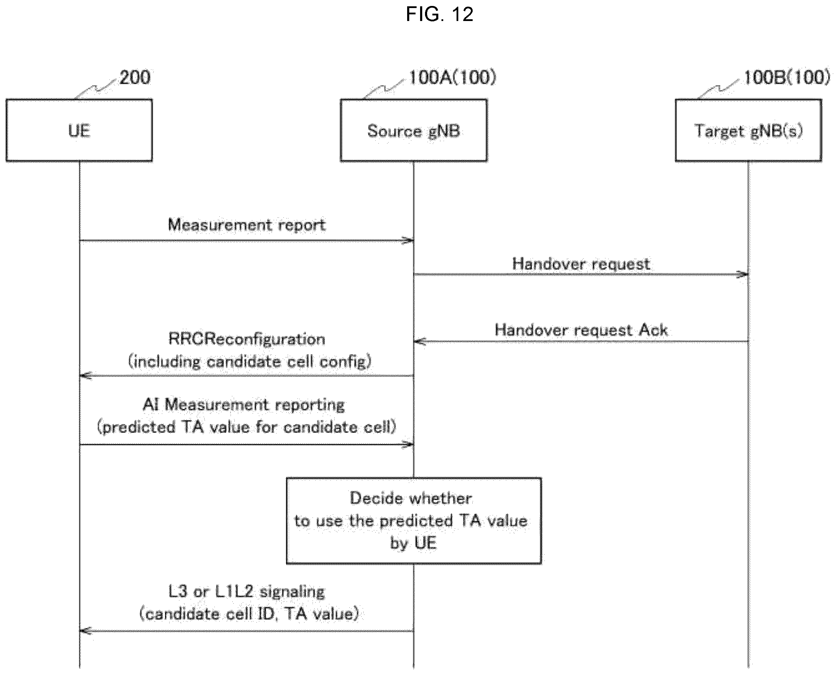

Fig. 12 shows a detailed flow in which the gNB 100 is divided into a source gNB (gNB 100A) and a target gNB (gNB 100B) with respect to Fig. 7. First, the UE 200 transmits a measurement report to the gNB 100A. In response to this, the gNB 100A requests/permits HO with the gNB 100, and transmits a configuration of a candidate cell to the UE 2000. Since the subsequent flow is the same as that of Fig. 7, the description thereof will be omitted.

### (3.2.2) Operation Example 2

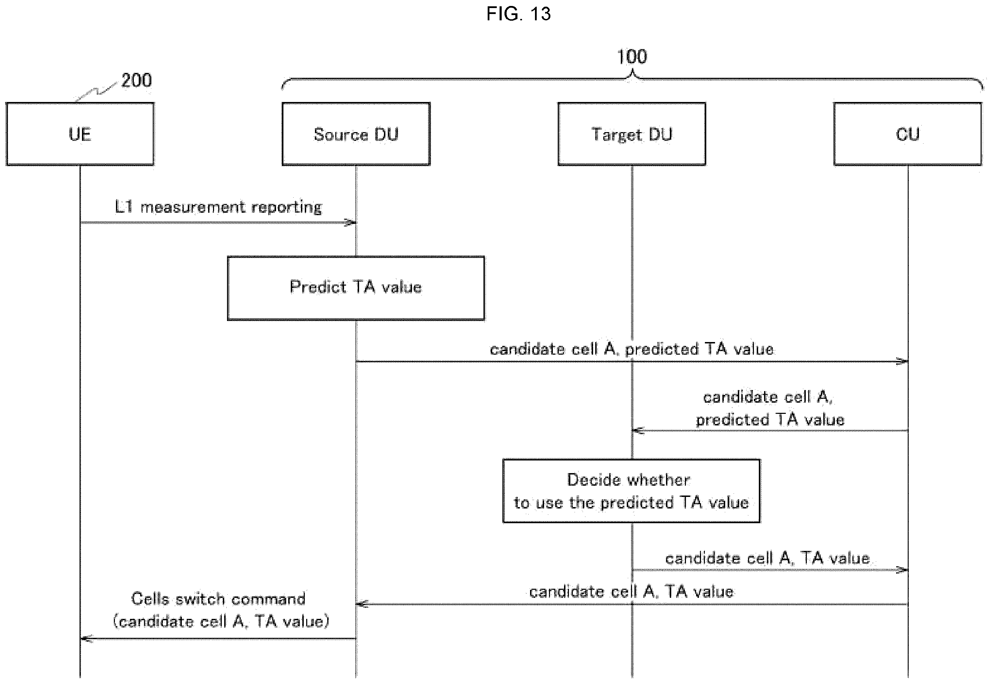

Operation Example 2 will be described with reference to Fig. 13 to Fig. 17. Operation Example 2 is based on the premise that a learning model is mounted on the gNB 100. That is, in Operation Example 2, an entity that calculates various parameters such as a predicted value of the TA value using a learning model is the gNB 100. Note that the HO in the present operation example may be an HO (LTM, CHO, etc.) to which RACH-less HO is applicable, but may be RACH-based HO (conventional HO).

### (3.2.2.1) Operation Example 2-1

Operation Example 2-1 is an operation example when a learning model is mounted on a gNB-DU. In this case, a source DU may predict a TA value of a candidate cell using a learning model and calculate a predicted value of the TA value, and a target DU may predict a TA value of a candidate cell using a learning model and calculate a predicted value of the TA value. Note that the source DU, the target DU, and the CU are assumed to be included in the gNB 100.

In the description of Operation Example 2-1, portions described with reference to Fig. 7 to Fig. 12 so far will be omitted as appropriate.

Fig. 13 shows a flow when a source DU predicts a TA value of a candidate cell using a learning model. The source DU transmits a predicted value of the TA value to a target DU via a gNB-CU. The target DU determines applicability of the predicted value of the TA value, and when determining that the predicted value is applicable, transmits a fact to that effect to the source DU via the gNB-CU. The source DU transmits a transition command to the UE 200, similarly to Fig. 7 and Fig. 12.

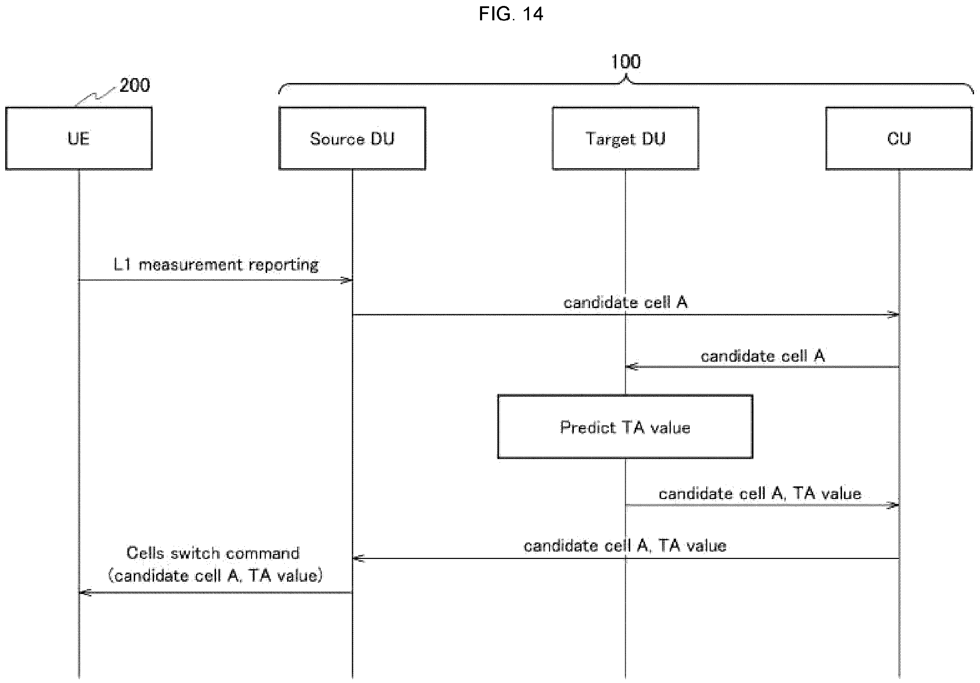

Fig. 14 shows a flow when a target DU predicts a TA value of a candidate cell using a learning model. A source DU transmits a candidate cell of a transition destination of the UE 200 (candidate cell A in the figure) to the target DU via a gNB-CU. The target DU calculates a predicted value of the TA value of the candidate cell using a learning model, and transmits the predicted value to the source DU via the gNB-CU. The source DU transmits a transition command to the UE 200, similarly to Fig. 7 and Fig. 12. Note that applicability of the predicted value of the TA value in this case may be determined by the target DU or may be determined by the source DU.

Further, in Fig. 13, similarly to Fig. 8 and Fig. 9, the source DU may calculate and transmit not only the predicted value of the TA value but also a confidence score thereof. The target DU may determine applicability of the predicted value of the TA value based on the confidence score. Similarly, in Fig. 14, the target DU may calculate not only the predicted value of the TA value but also a confidence score thereof, and determine applicability of the predicted value of the TA value based on the confidence score.

Also in the present operation example, similarly to Operation Example 1, the source DU may calculate a predicted value of a TAG value obtained by grouping TA values of a plurality of candidate cells, and may further transmit the predicted value. Further, a valid period of each TA value (hereinafter, also referred to as a TA timer) may be predicted, and may be further transmitted. Furthermore, when a plurality of TA values can be configured for one candidate cell, predicted values of the plurality of TA values may be calculated, and may be further transmitted. In addition, a valid period of a configured grant may also be calculated (predicted). Note that the target DU may calculate these predicted values instead of the source DU.

### (3.2.2.2) Operation Example 2-2

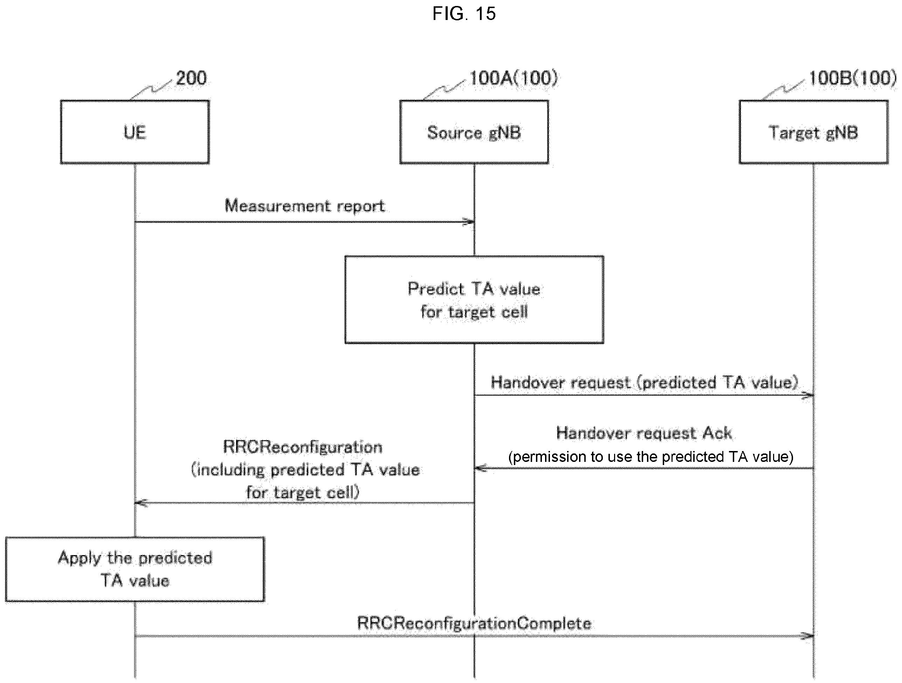

Operation Example 2-2 is an operation example when a learning model is mounted on a gNB-CU. In this case, the gNB-CU may predict a TA value of a candidate cell using a learning model and calculate a predicted value of the TA value. More specifically, in the case of Inter-CU LTM or Inter-CU CHO, a gNB-CU of a source gNB (gNB 100A) may predict a TA value of a candidate cell using a learning model and calculate a predicted value of the TA value, and a gNB-CU of a target gNB (gNB 100B) may predict a TA value of a candidate cell using a learning model and calculate a predicted value of the TA value. Therefore, in Fig. 15 to Fig. 17, the source gNB may be interpreted to mean the gNB-CU of the gNB 100A, and the target gNB may be interpreted to mean the gNB-CU of the gNB 100B.

In the description of Operation Example 2-2, portions described with reference to Fig. 7 to Fig. 14 so far will be omitted as appropriate.

In Fig. 15, similarly to Fig. 13, the gNB-CU of the source gNB calculates a predicted value of the TA value using a learning model, and the gNB-CU of the target gNB determines applicability of the predicted value of the TA value. When use of the predicted value of the TA value is determined, the UE 200 applies the predicted value of the TA value to RACH-less HO.

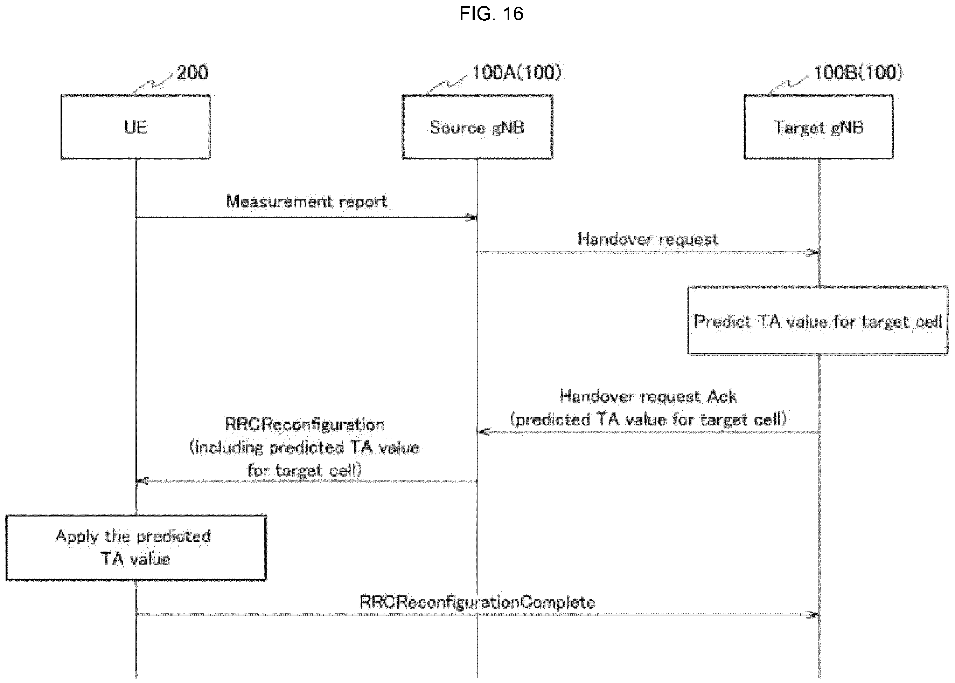

In Fig. 16, similarly to Fig. 14, the gNB-CU of the target gNB calculates a predicted value of the TA value using a learning model, and transmits the predicted value of the TA value to the UE 200 via the gNB-CU of the source gNB. The UE 200 applies the predicted value of the TA value to RACH-less HO.

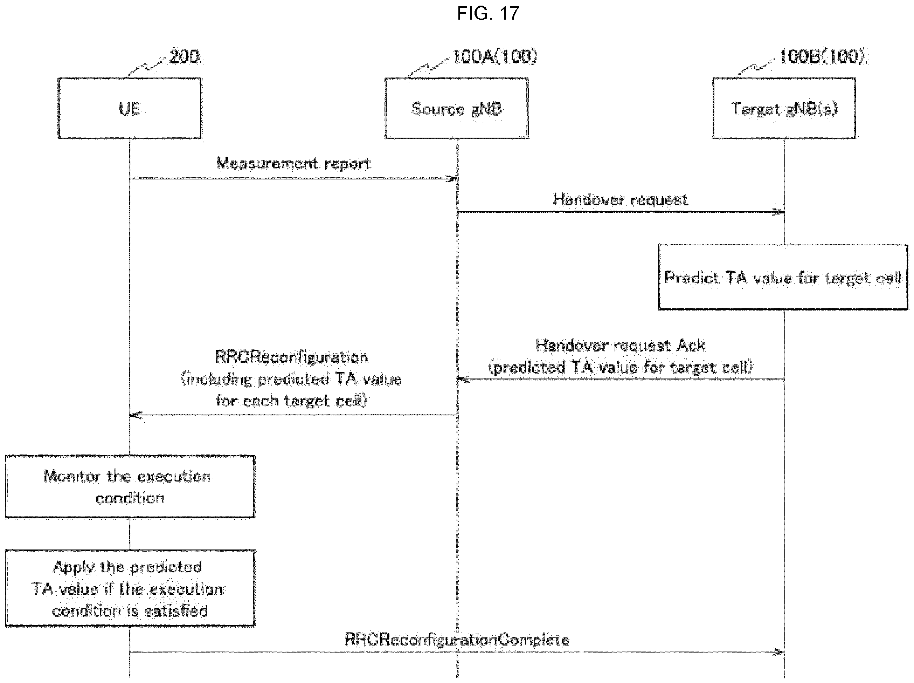

Fig. 17 shows a flow of executing RACH-less HO of CHO instead of LTM in Fig. 16. As described in Fig. 16, after the predicted value of the TA value is transmitted to the UE 200, the UE 200 monitors an HO execution condition. The UE 200 executes RACH-less CHO when the HO execution condition is satisfied.

Further, in Fig. 15, similarly to Fig. 8 and Fig. 9, the gNB-CU of the source gNB (gNB 100A) may calculate and transmit not only the predicted value of the TA value but also a confidence score thereof. The gNB-CU of the target gNB (gNB 100B) may determine applicability of the predicted value of the TA value based on the confidence score. Similarly, in Fig. 16 and Fig. 17, the gNB-CU of the target gNB (gNB 100B) may calculate not only the predicted value of the TA value but also a confidence score thereof, and determine applicability of the predicted value of the TA value based on the confidence score.

### (4) Action and Effects

According to the above-described embodiments, by using the predicted value of the TA value and the valid period of the TA value calculated using the learning model, the early sync procedure can be simplified and certainty of RACH-less HO can be enhanced.

Further, by using the confidence score for the predicted value of the TA value, the certainty of RACH-less HO can be further enhanced.

Further, when a transmission timing of the predicted value of the TA value is based on an instruction from the gNB 100, the transmission timing can be controlled on the gNB 100 (network) side.

Further, when the transmission timing of the predicted value of the TA value is based on expiration of a timer managing the valid period of the TA value, the predicted value of the TA value can be efficiently updated.

Further, regarding the predicted value of the TA value, the gNB 100 determines suitability thereof, whereby the certainty of RACH-less HO can be further enhanced.

Further, when the RACH-less HO fails using the predicted value of the TA value, stability of communication can be ensured by falling back to the RACH-based HO.

Further, by transmitting the predicted value of the TA value included in a transition command (for example, a cell(s) switch command) to the UE 200, the UE 200 can rapidly execute RACH-less HO using the predicted value of the TA value.

### (5) Other Embodiments

Although the contents of the present invention have been described above based on the embodiments, it is obvious to a person skilled in the art that the present invention is not limited to these descriptions, and various modifications and improvements can be made.

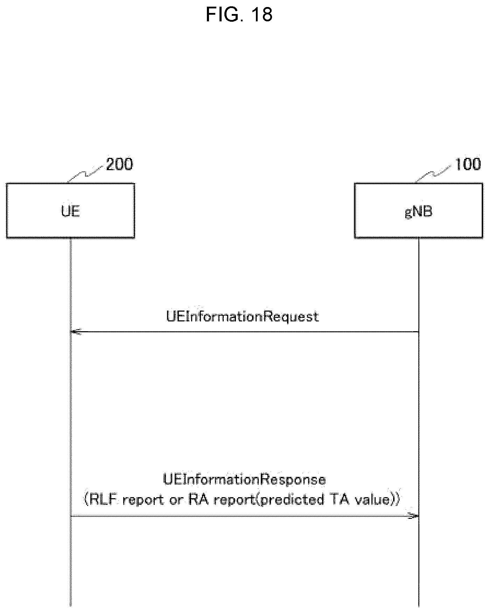

In the above-described disclosure, when HO using the predicted value of the TA value calculated by the UE 200 fails (or when RLF occurs), the UE 200 may report the predicted value of the TA value. As shown in Fig. 18, the UE 200 may report the predicted value of the TA value by including it in a UEInformationResponse message (RLF report or RA report) to a UEInformationRequest message from the gNB 100.

In the above-described disclosure, the learning model may be applied to an O-RAN architecture. For example, when the learning model is mounted on a Near-Real Time RIC, the Near-Real Time RIC may calculate the predicted value of the TA value using the learning model. The predicted value of the TA value may be transmitted to an O-CU or an O-DU via an E2 interface. Further, in this case, in addition to the predicted value of the TA value, a confidence score for the predicted value of the TA value may be transmitted.

In the above-described disclosure, it is assumed that one general-purpose learning model is used, but the present invention is not limited to this. Different learning models may be used according to contents to be predicted.

The operation examples described above may be applied in combination in a complex manner as long as no contradiction arises.

The block diagram used in the description of the above-described embodiment illustrates blocks in units of functions. Those functional blocks (components) can be realized by any combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work may be called a transmitting unit or a transmitter. For any of the above, as described above, the realization method is not particularly limited.

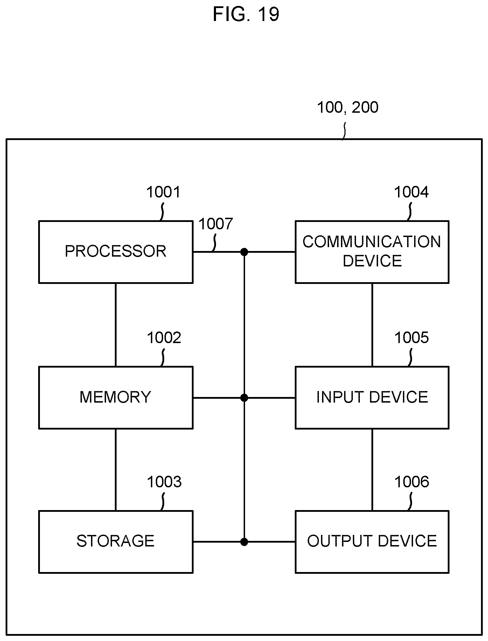

Further, the above-described base station 100 and terminal 200 and the like in one embodiment of the present disclosure may function as a computer that performs processing of the radio communication method of the present disclosure. Fig. 19 is a diagram illustrating an example of a hardware configuration of the base station 100 and the terminal 200 according to one embodiment of the present disclosure. The above-described base station 100 and terminal 200 may be physically configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the base station 100 and the terminal 200 may be configured to include one or a plurality of the devices illustrated in the figure, or may be configured not to include some of the devices.

Each function in the base station 100 and the terminal 200 is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a central processing unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and performs various processes according to these. As the program, a program causing the computer to perform at least part of the operation described in the above embodiment is used. Furthermore, although the various processes described above have been described as being performed by one processor 1001, they may be performed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the radio communication method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The recording medium may be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like. The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch panel).

Also, the respective devices such as the processor 1001 and the memory 1002 are connected to each other with the bus 1007 for communicating information. The bus 1007 may be constituted by a single bus or may be constituted by different buses for each device-to-device.

Further, the base station 100 and the terminal 200 may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of each functional block may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, Radio Resource Control (RRC) signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure may be applied to at least one of Long Term Evolution (LTE), LTE-Advanced (LTE-A), SUPER 3G, IMT-Advanced, the 4th generation mobile communication system (4G), the 5th generation mobile communication system (5G), the 6th generation mobile communication system (6G), the xth generation mobile communication system (xG) (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system expanded, modified, created, or defined based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information and the like may be stored in a specific location (for example, a memory) or may be managed in a management table. The information and the like to be input/output can be overwritten, updated, or added. The output information and the like may be deleted. The inputted information and the like may be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure may be represented by an absolute value, may be represented by a relative value from a predetermined value, or may be represented by corresponding other information. For example, a radio resource may be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)). The term "cell" or "sector" refers to a part or all of the coverage area of at least one of a base station and a base station subsystem that performs a communication service in this coverage.

In the present disclosure, transmitting information to the terminal by the base station may be referred to as instructing the terminal to perform any control and/or operation based on the information by the base station.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may refer to a movable object, and the moving speed is arbitrary. Of course, it also includes a case where the moving body is stopped. The moving body includes, but is not limited to, for example, a vehicle, a transport vehicle, a car, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone (registered trademark), a multicopter, a quadcopter, a balloon, and objects mounted thereon. Further, the moving body may be a moving body that travels autonomously based on an operation command. The moving body may be a vehicle (for example, a car, an airplane, or the like), an unmanned moving body (a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be read as meaning a mobile station (user terminal, hereinafter, the same). For example, each aspect/embodiment of the present disclosure may be applied to a configuration in which communication between a base station and a terminal is replaced with communication between a plurality of mobile stations (which may be called Device-to-Device (D2D), Vehicle-to-Everything (V2X), or the like). In this case, the mobile station (terminal 200) may have the function of the base station 100 described above. In addition, words such as "uplink" and "downlink" may also be read as meaning words corresponding to inter-terminal communication (for example, "side"). For example, an uplink channel, a downlink channel, or the like may be read as meaning a side channel.

Similarly, the mobile station in the present disclosure may be read as meaning a base station. In this case, the base station 100 may have the function of the terminal 200.

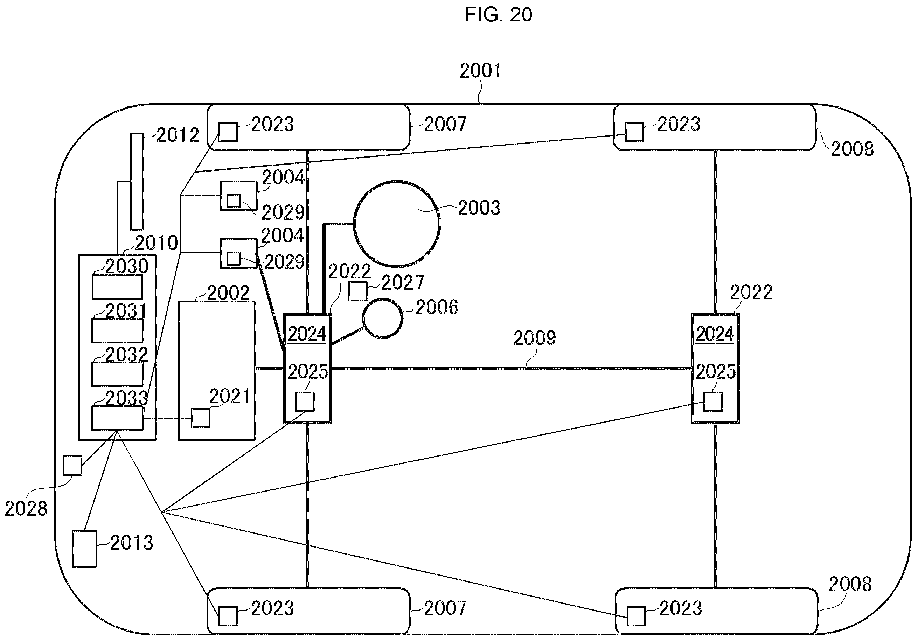

FIG. 20 shows an example of the configuration of the vehicle 2001. As shown in FIG. 20, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, and an engine-motor hybrid.

The steering unit 2003 includes at least a steering wheel (also called a steering wheel) and is configured to steer at least one of the front and rear wheels based on the operation of the steering wheel operated by the user.

The electronic control unit 2010 consists of a microprocessor 2031, a memory (ROM, RAM) 2032 and communication ports (IO ports) 2033. The electronic control unit 2010 receives signals from various sensors 2021 to 2027 provided in the vehicle. The electronic control unit 2010 may be referred to as an ECU (Electronic Control Unit).

The signals from the various sensors 2021 to 2029 include a current signal from a current sensor 2021 for sensing the current of a motor, a speed signal of a front wheel and a rear wheel acquired by an rpm sensor 2022, a pressure signal of a front wheel and a rear wheel acquired by an air pressure sensor 2023, a speed signal of a vehicle acquired by a speed sensor 2024, an acceleration signal acquired by an acceleration sensor 2025, an accelerator pedal depressing amount signal acquired by an accelerator pedal sensor 2029, a brake pedal depressing amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like.

The information service unit 2012 comprises various devices such as a car navigation system, an audio system, a speaker, a television, and a radio for providing (outputting) various information such as driving information, traffic information, and entertainment information, and one or more ECUs for controlling these devices. The information service unit 2012 provides various multimedia information and multimedia services to the occupants of the vehicle 2001 by utilizing information acquired from an external device via the communication module 2013 or the like.

The information service unit 2012 may include an input device (e.g. keyboard, mouse, microphone, switch, button, sensor, touch panel, etc.) that accepts input from the outside or an output device (e.g. displays, speakers, LED lamps, touch panels, etc.) that performs output to the outside.

A driver assistance system unit 2030 consists of various devices, such as millimeter-wave radar, LiDAR (Light Detection and Ranging), camera, positioning locator (e.g. GNSS), map information (e.g. high-definition (HD) maps, self-driving car (AV) maps, etc.), gyro system (e.g. IMU (Inertial Measurement Unit), INS (Inertial Navigation System), etc.), AI (Artificial Intelligence) chip, AI processor, which are used to provide functions to prevent accidents or reduce the driver's driving load, and one or more ECUs that control these devices. The driver assistance system unit 2030 also transmits and receives various information via the communication module 2013 to realize a driver assistance function or an automatic driving function.

The communication module 2013 can communicate with the microprocessor 2031 and components of the vehicle 2001 via a communication port. For example, the communication module 2013 transmits and receives data via the communication port 2033 to and from the microprocessor 2031, the memory (ROM, RAM) 2032, and the sensors 2021 to 2029 in the drive unit 2002, the steering unit 2003, the accelerator pedal 2004, the brake pedal 2005, the shift lever 2006, the left and right front wheels 2007, the left and right rear wheels 2008, the axle 2009, and the electronic control unit 2010 in the vehicle 2001.

The communication module 2013 is a communication device that can be controlled by the microprocessor 2031 of the electronic control unit 2010 and can communicate with external devices. For example, it transmits and receives various information to and from external devices via radio communication. The communication module 2013 may be either inside or outside the electronic control unit 2010. The external device may be, for example, a base station, a mobile station, etc.

The communication module 2013 may transmit at least one of the signals from the various sensors 2021 to 2029 input to the electronic control unit 2010 described above, information obtained based on the signals, and information based on input from the outside (user) obtained via the information service unit 2012 to an external apparatus via radio communication. The electronic control unit 2010, the various sensors 2021 to 2029, the information service unit 2012, and the like may be called an input unit that accepts input. For example, the PUSCH transmitted by the communication module 2013 may include information based on the input.

The communication module 2013 receives various kinds of information (traffic information, signal information, Inter-vehicular distance information, etc.) transmitted from an external device and displays them to the information service unit 2012 provided in the vehicle. The information service unit 2012 may be called an output unit that outputs information (for example, outputs information to devices such as a display and a speaker based on a PDSCH received by the communication module 2013 (or data/information decoded from the PDSCH)).

The communication module 2013 also stores various information received from external devices in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2029, etc. provided in the vehicle 2001.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as meaning "assuming", "expecting", "considering", and the like.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be read as meaning "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element has to precede the second element in some or the other manner.

"Means" in the configuration of each device above may be replaced with "unit", "circuit", "device", and the like.

In the present disclosure, the used terms "include", "including", and variants thereof are intended to be inclusive in a manner similar to the term "comprising". Furthermore, the term "or" used in the present disclosure is intended not to be an exclusive-OR.

A radio frame may be composed of one or more frames in the time domain. Each of the one or more frames in the time domain may be referred to as a subframe. A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1 to 13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as meaning a TTI having a time length exceeding 1 ms, and a short TTI (for example, shortened TTI) may be read as meaning a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a subcarrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as meaning "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The "maximum transmission power" described in the present disclosure may mean a maximum value of transmission power, may mean the nominal UE maximum transmit power, or may mean the rated UE maximum transmit power.

Throughout the present disclosure, for example, during translation, if articles such as a, an, and the in English are added, the present disclosure may include that a noun following these articles is used in plural.

In the present disclosure, the wording "A and B are different" may mean "A and B are different from each other". It should be noted that the wording may mean "A and B are each different from C". Terms such as "separate", "couple", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### (Supplementary Note)

The above-described disclosure may be expressed as follows.

The first feature is a base station comprising: a control unit that calculates, using a learning model, a predicted value of a transmission timing for transmitting data to a base station which is a transmission destination, the transmission timing being used by a terminal for connecting to the base station which is the transmission destination without executing random access, and a valid period of the transmission timing; and a transmission unit that transmits the predicted value and the valid period to the base station which is the transmission destination.

The second feature is the base station according to the first feature, wherein the control unit calculates a confidence score for the predicted value, and the transmission unit transmits the confidence score to the base station which is the transmission destination.

The third feature is the base station according to the first feature, wherein the transmission unit transmits the predicted value to the terminal when the base station which is the transition destination permits use of the predicted value.

The fourth feature is the base station according to the second feature, wherein the transmission unit transmits the predicted value to the terminal when the base station which is the transmission destination permits use of the predicted value based on the confidence score.

The fifth feature is the base station according to the third feature, wherein the transmission unit transmits the predicted value included in a transition command to the terminal.

The sixth feature is the base station according to the fourth feature, wherein the transmission unit transmits the predicted value included in a transition command to the terminal.

### Reference Signs List

10 RADIO COMMUNICATION SYSTEM
20 NG-RAN
100 BASE STATION
110 RADIO SIGNAL TRANSMISSION/RECEPTION UNIT
120 AMPLIFIER UNIT
130 MODULATION/DEMODULATION UNIT
140 CONTROL SIGNAL/REFERENCE SIGNAL PROCESSING UNIT
150 ENCODING/DECODING UNIT
160 DATA TRANSMISSION/RECEPTION UNIT
170 CONTROL UNIT
200 TERMINAL
210 RADIO SIGNAL TRANSMISSION/RECEPTION UNIT
220 AMPLIFIER UNIT
230 MODULATION/DEMODULATION UNIT
240 CONTROL SIGNAL/REFERENCE SIGNAL PROCESSING UNIT
250 ENCODING/DECODING UNIT
260 DATA TRANSMISSION/RECEPTION UNIT
270 CONTROL UNIT
1001 PROCESSOR
1002 MEMORY
1003 STORAGE
1004 COMMUNICATION DEVICE
1005 INPUT DEVICE
1006 OUTPUT DEVICE
1007 BUS
2001 VEHICLE
2002 DRIVE UNIT
2003 STEERING UNIT
2004 ACCELERATOR PEDAL
2005 BRAKE PEDAL
2006 SHIFT LEVER
2007 LEFT AND RIGHT FRONT WHEELS
2008 LEFT AND RIGHT REAR WHEELS
2009 AXLE
2010 ELECTRONIC CONTROL UNIT
2012 INFORMATION SERVICE UNIT
2013 COMMUNICATION MODULE
2021 CURRENT SENSOR
2022 ROTATION SPEED SENSOR
2023 AIR PRESSURE SENSOR
2024 VEHICLE SPEED SENSOR
2025 ACCELERATION SENSOR
2026 BRAKE PEDAL SENSOR
2027 SHIFT LEVER SENSOR
2028 OBJECT DETECTION SENSOR
2029 ACCELERATOR PEDAL SENSOR
2030 DRIVER ASSISTANCE SYSTEM UNIT
2031 MICROPROCESSOR
2032 MEMORY (ROM, RAM)
2033 COMMUNICATION PORT

## Claims

1. A base station comprising:
a control unit that calculates, using a learning model, a predicted value of a transmission timing for transmitting data to a base station which is a transmission destination, the transmission timing being used by a terminal for connecting to the base station which is the transmission destination without executing random access, and a valid period of the transmission timing; and
a transmission unit that transmits the predicted value and the valid period to the base station which is the transmission destination.

2. The base station according to claim 1, wherein
the control unit calculates a confidence score for the predicted value, and the transmission unit transmits the confidence score to the base station which is the transmission destination.

3. The base station according to claim 1, wherein
the transmission unit transmits the predicted value to the terminal when the base station which is the transition destination permits use of the predicted value.

4. The base station according to claim 2, wherein
the transmission unit transmits the predicted value to the terminal when the base station which is the transition destination permits use of the predicted value based on the confidence score.

5. The base station according to claim 3, wherein
the transmission unit transmits the predicted value included in a transition command to the terminal.

6. The base station according to claim 4, wherein
the transmission unit transmits the predicted value included in a transition command to the terminal.
